# EUROPÄISCHE PATENTSCHRIFT

(11) **EP 0 912 962 B1**
(45) Veröffentlichungstag und Bekanntmachung des Hinweises auf die Patenterteilung: **05.04.2000**
(21) Anmeldenummer: 96921035.0
(22) Anmeldetag: 15.07.1996
(51) Int. Cl.: G06K 19/16, G06K 19/08

(54) **DATENTRÄGER MIT EINEM MODUL UND EINEM HOLOGRAMM**
DATA CARRIER WITH A MODULE AND A HOLOGRAM
SUPPORT DE DONNEES PRESENTANT UN MODULE ET UN HOLOGRAMME

(43) Veröffentlichungstag der Anmeldung: 06.05.1999
(73) Patentinhaber: Austria Card Plastikkarten und Ausweissysteme Gesellschaft MBH, 1232 Vienna (AT)
(72) Erfinder: PRANCZ, Markus, A-1200 Vienna (AT)
(74) Vertreter: Weber, Helmut
(86) Internationale Anmeldenummer: IB9600693
(87) Internationale Veröffentlichungsnummer: WO9802849

(56) Entgegenhaltungen:
- EP-A- 0 548 858
- EP-A- 0 636 495
- EP-A- 0 709 805
- DE-A- 4 328 469

## Beschreibung

Die Erfindung bezieht sich auf einen Datenträger mit einem Datenträgerkörper, der von einer Körperfläche begrenzt ist und in dem eine in die besagte Körperfläche mündende Ausnehmung vorgesehen ist, in die ein Modul eingesetzt ist, der einen plattenförmigen Bauteilträger mit einer der besagten Körperfläche zugewandten ersten Trägerhauptfläche und mit einer von der besagten Körperfläche abgewandten zweiten Trägerhauptfläche und mindestens einen im Bereich von der von der besagten Körperfläche abgewandten zweiten Trägerhauptfläche an dem Bauteilträger angebrachten, in der Ausnehmung von dem Bauteilträger abgedeckten Bauteil aufweist, und wobei an dem Datenträger in dem Bereich von dessen besagter Körperfläche ein plattenförmiger Hologrammträger vorgesehen ist, der über seine von außerhalb des Datenträgers sichtbare Hauptfläche ein Hologramm zeigt.

Ein solcher als Chipkarte ausgebildeter Datenträger gemäß der eingangs im ersten Absatz angeführten Gattung ist in mannigfaltigen Ausbildungen gebräuchlich und allgemein bekannt, beispielsweise als sogenannte Kreditkarte bzw. Bankkarte im Bankenverkehr (z.B. EP-A- 0 709 805). Bei der bekannten Chipkarte liegt der in die - in eine erste Körperhauptfläche mündende - Ausnehmung eingesetzte Modul relativ nahe bei einem kurzen Kartenrand der Chipkarte und der Hologrammträger relativ nahe bei dem gegenüberliegenden kurzen Kartenrand der Chipkarte. Die bekannte Chipkarte und ihr in die Ausnehmung eingesetzter Modul sind zum Durchführen von ausschließlich einem kontaktbehafteten Betrieb ausgebildet, wofür ein als plattenförmiger Bauteilträger vorgesehener Chipträger an seiner von außen zugänglichen ersten Trägerhauptfläche mit flächenförmigen Anschlußkontakten versehen ist, die ein Kontaktfeld bilden, dessen Flächenform der Querschnittsfläche der in die erste Körperhauptfläche mündenden Ausnehmung entspricht. Die flächenförmigen Anschlußkontakte liegen hierbei vollkommen ungeschützt und frei zugänglich, so daß sie relativ leicht beschädigt werden können, was hinsichtlich einer einwandfreien Funktionstüchtigkeit und auch im Hinblick auf ein einwandfreies Aussehen nachteilig ist.

Die Erfindung hat sich zur Aufgabe gestellt, die vorstehend angeführten Schwierigkeiten zu vermeiden und einen verbesserten Datenträger zu schaffen. Zur Lösung dieser Aufgabenstellung ist bei einem Datenträger gemäß der eingangs im ersten Absatz angeführten Gattung erfindungsgemäß vorgesehen, daß der plattenförmige Hologrammträger den plattenförmigen Bauteilträger des Moduls im Bereich von dessen der besagten Körperfläche zugewandten ersten Trägerhauptfläche überdeckend an dem Datenträger vorgesehen ist und diesen plattenförmigen Bauteilträger zumindest größtenteils abdeckt. Auf diese Weise ist erreicht, daß der Hologrammträger zum Abdecken des Bauteilträgers eines in eine Ausnehmung des Datenträgers eingesetzten Moduls ausgenützt ist, so daß der Bauteilträger im Bereich seiner ersten Trägerhauptfläche mit Hilfe des Hologrammträgers zumindest größtenteils geschützt und abgedeckt ist, so daß einer Beschädigung des Bauteilträgers bzw. von im Bereich der ersten Trägerhauptfläche desselben vorgesehenen Bestandteilen des Bauteilträgers vorgebeugt ist. Wenn es sich bei dem erfindungsgemäßen Datenträger um einen Datenträger zum Durchführen von einem kontaktbehafteten Betrieb handelt, wobei dann der Modul des Datenträgers einen Bauteilträger aufweist, der im Bereich seiner ersten Trägerhauptfläche mit flächenförmigen Anschlußkontakten versehen ist, dann hat der plattenförmige Hologrammträger an vorgegebenen Stellen partielle Durchgänge bzw. Freistellungen, durch die hindurch Kontaktstifte einer Schreib/Lese-Einrichtung mit den größtenteils von dem Hologrammträger abgedeckten flächenförmigen Anschlußkontakten in elektrisch leitende Verbindung treten können.

Bei einem erfindungsgemäßen Datenträger hat sich als vorteilhaft erwiesen, wenn die der besagten Körperfläche zugewandte erste Trägerhauptfläche des plattenförmigen Bauteilträgers und die ein Hologramm zeigende Hauptfläche des plattenförmigen Hologrammträgers eine vollkommen identische Flächenausbildung aufweisen und wenn der Hologrammträger ausschließlich mit dem Bauteilträger verbunden ist. Eine solche Ausbildung eines erfindungsgemäßen Datenträgers ist deshalb vorteilhaft, weil der Hologrammträger bereits vor dem Einsetzen eines Moduls in die Ausnehmung des Datenträgers mit dem Bauteilträger dieses Moduls verbunden werden kann.

Bei einem erfindungsgemäßen Datenträger hat sich aber auch als vorteilhaft erwiesen, wenn der Datenträger einen erst nach dem Einsetzen des Moduls in die Ausnehmung des Datenträgers im Bereich von der der besagten Körperfläche zugewandten ersten Trägerhauptfläche mit zumindest dem plattenförmigen Bauteilträger dieses Moduls verbundenen plattenförmigen Hologrammträger aufweist, dessen Hauptfläche die erste Trägerhauptfläche des Bauteilträgers zumindest größtenteils abdeckt. Ein solche Ausbildung eines erfindungsgemäßen Datenträgers hat sich deshalb als vorteilhaft erweisen, weil hierbei der Hologrammträger erst nach dem Einsetzen eines Moduls in die Ausnehmung des Datenträgers mit dem Bauteilträger dieses Moduls verbunden werden kann.

Bei einem wie im vorstehenden Absatz angeführten Datenträger hat sich weiters als vorteilhaft erwiesen, wenn der plattenförmige Hologrammträger mit einem Randbereich seiner ein Hologramm zeigenden Hauptfläche die der besagten Körperfläche zugewandte erste Trägerhauptfläche des Bauteilträgers entlang von deren gesamtem Umfang überragt und hierbei der Hologrammträger mit dem Bauteilträger und zusätzlich mit seinem Randbereich mit dem Datenträgerkörper verbunden ist. Auf diese Weise ist erreicht, daß der Hologrammträger nicht nur für eine mechanische Schutzfunktion für den Bauteilträger des Moduls eines erfindungsgemäßen Datenträgers ausgenützt wird, sondern zusätzlich auch noch eine Abdichtfunktion erfüllt, so daß ein Datenträger mit einem besonders gut geschützten Modul realisiert ist.

Eine vorteilhafte Ausbildungsvariante eines erfindungsgemäßen Datenträgers ist dadurch gekennzeichnet, daß der Datenträger zum Durchführen von ausschließlich einem kontaktlosen Betrieb ausgebildet ist, dessen Modul einen Bauteilträger aufweist, der im Bereich seiner ersten Trägerhauptfläche kontaktlos ausgebildet ist. Ein solcher Datenträger zeichnet sich durch eine einfache und bequeme Handhabung aus.

Eine vorteilhafte Ausbildungsvariante eines wie im vorstehenden Absatz angeführten erfindungsgemäßen Datenträgers ist dadurch gekennzeichnet, daß der plattenförmige Hologrammträger mit seiner ein Hologramm zeigenden Hauptfläche die der besagten Körperfläche zugewandte erste Trägerhauptfläche des Bauteilträgers vollständig abdeckt. Auf diese Weise ist der Bauteilträger im Bereich von seiner gesamten ersten Trägerhauptfläche geschützt und abgedeckt, wodurch ein besonders guter Schutz erreicht ist.

Erfindungsgemäße Datenträger können unterschiedlichen Zwecken dienen und verschiedene Formen aufweisen, beispielsweise eine Schlüsselform, eine Stabform oder auch andere Formen. Eine besonders bevorzugte Variante eines erfindungsgemäßen Datenträgers ist dadurch gekennzeichnet, daß der Datenträger als Chipkarte ausgebildet ist.

Die vorstehend angeführte Aspekte und weitere Aspekte der Erfindung gehen aus den nachfolgend beschriebenen Ausführungsbeispielen hervor und sind anhand dieser Ausführungsbeispiele erläutert.

Die Erfindung wird im folgenden anhand von drei in den Zeichnungen dargestellten Ausführungsbeispielen weiter erläutert, auf die die Erfindung aber nicht beschränkt ist.

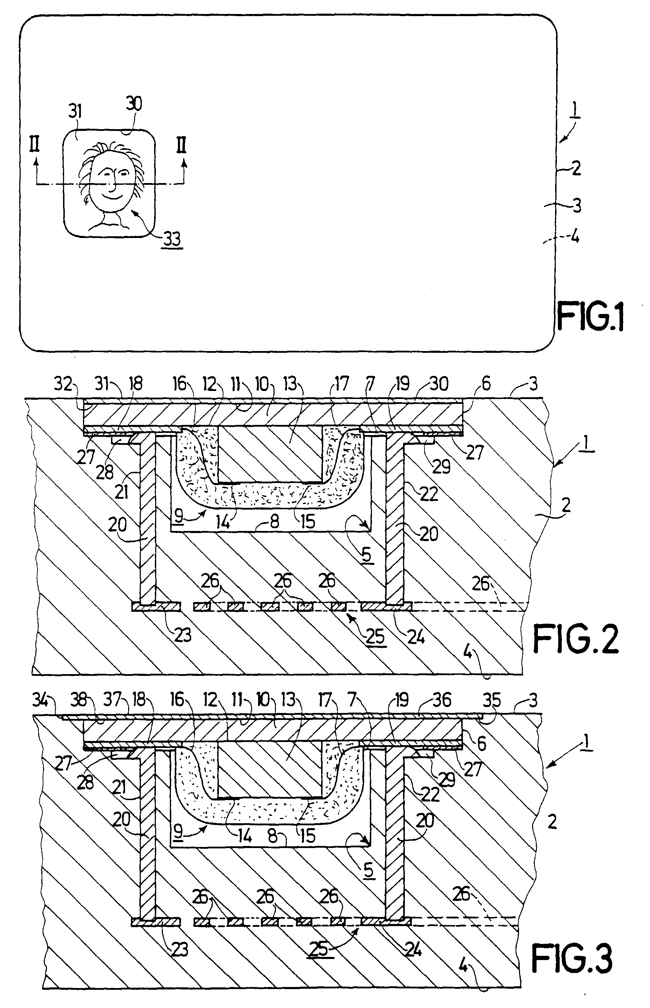

Die Figur 1 zeigt in einer Draufsicht eine Chipkarte als Datenträger gemäß einem Ausführungsbeispiel der Erfindung, die zum Durchführen von ausschließlich einem kontaktlosen Betrieb ausgebildet ist und in die ein Modul eingesetzt ist, der als plattenförmigen Bauteilträger einen plattenförmigen Chipträger und einen an dem Chipträger als Bauteil angebrachten Chip und einen bereits vor dem Einsetzen des Moduls in die Chipkarte mit dem plattenförmigen Chipträger verbundenen plattenförmigen Hologrammträger aufweist.

Die Figur 2 zeigt in einem Querschnitt gemäß der Linie II-II in der Figur 1 einen Teil der Chipkarte gemäß der Figur 1, der den in die Chipkarte eingesetzten Modul enthält, an dessen plattenförmigem Chipträger der plattenförmige Hologrammträger angebracht ist, dessen Hauptfläche dieselbe Flächen form wie die Trägerhauptflächen des Chipträgers aufweisen.

Die Figur 3 zeigt auf analoge Weise wie die Figur 2 einen Teil einer Chipkarte als Datenträger gemäß einem zweiten Ausführungsbeispiel der Erfindung, die zum Durchführen von ausschließlich einem kontaktlosen Betrieb ausgebildet ist und in die ein Modul eingesetzt ist, dessen als Bauteilträger vorgesehener Chipträger von einem plattenförmigen Hologrammträger abgedeckt ist, dessen Hauptfläche die ihm zugewandte Trägerhauptfläche des Chipträgers entlang von deren gesamtem Umfang überragt.

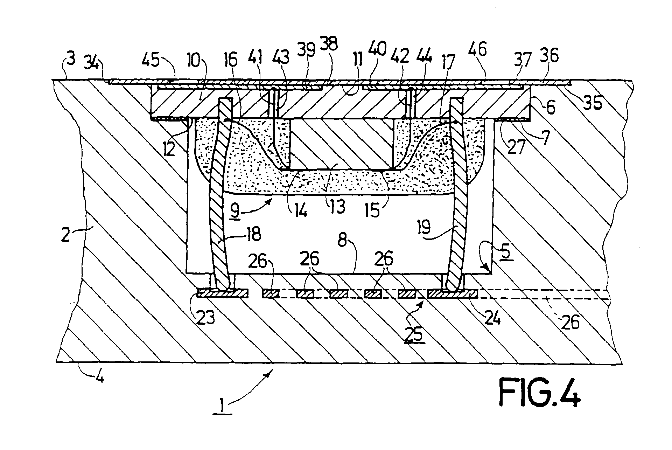

Die Figur 4 zeigt auf analoge Weise wie die Figuren 2 und 3 einen Teil einer Chipkarte als Datenträger gemäß einem dritten Ausführungsbeispiel der Erfindung, die zum Durchführen von sowohl einem kontaktbehafteten Betrieb als auch einem kontaktlosen Betrieb ausgebildet ist und in die ein Modul eingesetzt ist, dessen als Bauteilträger vorgesehener Chipträger von einem plattenförmigen Hologrammträger abgedeckt ist, dessen Hauptfläche die ihm zugewandte Trägerhauptfläche des Chipträgers entlang von deren gesamten Umfang überragt.

In den Figuren 1 und 2 ist eine einen Datenträger bildende Chipkarte 1 dargestellt, die als Datenträgerkörper einen in einem Laminiervorgang hergestellten Kartenkörper 2 aufweist. Der Kartenkörper 2 ist unter anderem von einer ersten Körperhauptfläche 3 und von einer zweiten Körperhauptfläche 4 begrenzt. In dem Kartenkörper 2 ist eine abgestufte Ausnehmung 5 vorgesehen, die durch eine Materialabtragung hergestellt worden ist. Vorteilhafterweise ist die abgestufte Ausnehmung 5 in einem Fräsvorgang hergestellt worden; es kommen aber auch andere geeignete Techniken in Frage, etwa Ätztechniken oder Lasertechniken. Die abgestufte Ausnehmung 5 weist einen an die erste Körperhauptfläche 3 angrenzenden, im Querschnitt größeren ersten Ausnehmungsbereich 6, der unter anderem durch eine parallel zu der ersten Körperhauptfläche 3 verlaufende ringförmige Begrenzungsfläche 7 begrenzt ist, und einen an den ersten Ausnehmungsbereich 6 an dessen von der ersten Körperhauptfläche 3 abgewandter Seite anschließenden, im Querschnitt kleineren zweiten Ausnehmungsbereich 8 auf. Wie aus der Figur 2 ersichtlich ist, mündet die abgestufte Ausnehmung 5 in die besagte erste Körperhauptfläche 3.

Die Chipkarte 1 gemäß den Figuren 1 und 2 ist zum Durchführen von ausschließlich einem kontaktlosen Betrieb ausgebildet. Dementsprechend ist in die abgestufte Ausnehmung 5 ein zum Durchführen von ausschließlich einem kontaktlosen Betrieb ausgebildeter Modul 9 eingesetzt. Der Modul 9 weist als Bauteilträger einen plattenförmigen Chipträger 10 auf, der der durch eine Printplatte gebildet ist und der unter anderem von einer der besagten ersten Körperhauptfläche 3 zugewandten, kontaktlos ausgebildeten ersten Trägerhauptfläche 11 und von einer von der besagten ersten Körperhauptfläche 3 abgewandten zweiten Trägerhauptfläche 12 begrenzt ist. Weiters weist der Modul 9 als Bauteil einen im Bereich von der von der besagten ersten Körperhauptfläche 3 abgewandten zweiten Trägerhauptfläche 12 an dem plattenförmigen Chipträger 10 angebrachten, in der Ausnehmung 5 von dem plattenförmigen Chipträger 10 abgedeckten Chip 13 auf. An dem Chipträger 10 können zusätzlich auch noch andere Bauteile vorgesehen sein. Der Chip 13 ist mit zwei Chipanschlußkontakten 14 und 15 versehen. Die beiden Chipanschlußkontakte 14 und 15, die in Fachkreisen häufig auch als Pads bezeichnet werden, sind über zwei sogenannte Bonddrähte 16 und 17 mit zwei plattenförmigen Modulanschlußkontakten 18 und 19 elektrisch leitend verbunden. Die beiden Modulanschlußkontakte 18 und 19 sind beispielsweise durch Leiterbahnen gebildet, die an dem als Printplatte ausgebildeten Chipträger 10 im Bereich von dessen zweiter Trägerhauptfläche 12 vorgesehen sind. Die beiden Modulanschlußkontakte 18 und 19 sind über ein elektrisch leitendes Klebemittel 20, das je in einem in dem Kartenkörper 2 vorgesehenen, den Kartenkörper 2 teilweise durchsetzenden Kanal 21 und 22 aufgenommen ist, mit zwei Spulenanschlußkontakten 23 und 24 einer in dem Kartenkörper 2 enthaltenen Sende/Empfangs-Spule 25 verbunden. Die beiden Kanäle 21 und 22 sind vorteilhafterweise ebenso wie die abgestufte Ausnehmung 5 in einem Fräsvorgang hergestellt worden. Von der Sende/Empfangs-Spule 25 sind in der Figur 2 weiters auch ihre Spulenwindungen 26 dargestellt. Die Sende/Empfangs-Spule 25 dient unter anderem zum kontaktlosen induktiven Übertragen von Daten zwischen einer externen Sende/Empfangs-Einrichtung und dem in der Chipkarte 1 enthaltenen Chip 13. Weiters dient die Sende/Empfangs-Spule 25 auch zum Empfangen eines Wechselsignales, das in dem Chip 13 zur Gewinnung einer Gleichspannung ausgenützt wird, mit der der Chip 13 versorgt wird, um die vorerwähnte Übertragung von Daten zu dem Chip 13 bzw. von dem Chip 13 zu ermöglichen.

Zu erwähnen bleibt noch, daß bei der Chipkarte 1 im Bereich der ringförmigen Begrenzungsfläche 7 des größeren Ausnehmungsbereiches 6 eine Schicht 27 aus einem sogenannten Heißschmelz-Klebemittel vorgesehen ist, die eine Klebeverbindung zwischen der zweiten Trägerhauptfläche 12 des Chipträgers 10 und dem Kartenkörper 2 bildet, wodurch der gesamte Modul 9 an dem Kartenkörper 2 festgehalten ist. Weiters bleibt noch zu erwähnen, daß die beiden Kanäle 21 und 22 je mit einer von dem betreffenden Kanal 21 bzw. 22 seitlich abstehenden Tasche 28 und 29 versehen sind, die zum Aufnehmen von überschüssigem elektrisch leitendem Klebemittel 20 dienen, wie dies in der Figur 2 schematisch dargestellt ist.

Wie aus der vorstehenden Beschreibung ersichtlich ist, ist bei der Chipkarte 1 gemäß den Figuren 1 und 2 ein Betrieb derselben, nämlich eine Datenübertragung zu ihrem Chip 13 bzw. von ihrem Chip 13, ausschließlich auf kontaktlose Weise mit Hilfe der mit dem Chip 13 elektrisch leitend verbundenen Sende/Empfangs-Spule 25 möglich. Die Chipkarte 1 und ihr Modul 9 sind dementsprechend zum Durchführen von ausschließlich einem kontaktlosen Betrieb ausgebildet.

Bei der Chipkarte 1 gemäß den Figuren 1 und 2 ist an der Chipkarte 1 im Bereich von deren erster Körperfläche 3 weiters ein plattenförmiger Hologrammträger 30 vorgesehen. Der Hologrammträger 30 weist eine von außerhalb der Chipkarte 1 sichtbare erste Hauptfläche 31 und eine der ersten Hauptfläche 31 gegenüberliegende zweite Hauptfläche 32 auf. Über seine von außerhalb der Chipkarte 1 sichtbare erste Hauptfläche 31 zeigt der Hologrammträger 30 ein Hologramm 33, das beispielsweise ein Portrait eines Menschen zeigt, wie dies in der Figur 1 angedeutet ist.

Bei der Chipkarte 1 gemäß den Figuren 1 und 2 ist nunmehr vorteilhafterweise der plattenförmige Hologrammträger 30 an der Chipkarte 1 in der Weise vorgesehen, daß der plattenförmige Hologrammträger 30 den plattenförmigen Chipträger 10 im Bereich von dessen der besagten ersten Körperhauptfläche 3 zugewandten ersten Trägerhauptfläche 11 überdeckt. Hierbei deckt der plattenförmige Hologrammträger 30 den plattenförmigen Chipträger 10 im vorliegenden Fall vollständig ab. Der plattenförmige Hologrammträger 30 ist hierbei mittels einer zwischen seiner zweiten Hauptfläche 32 und der ersten Trägerhauptfläche 11 des Chipträgers 10 vorgesehenen, in der Figur 2 nicht separat dargestellten Klebeverbindung mit dem Chipträger 10 verbunden. Vorteilhafterweise ist bei der Chipkarte 1 gemäß den Figuren 1 und 2 ein bereits vor dem Einsetzen des Moduls 9 in die abgestufte Ausnehmung 5 der Chipkarte 1 im Bereich von der der besagten ersten Körperhauptfläche 3 zugewandten ersten Trägerhauptfläche 11 mit dem plattenförmigen Chipträger 10 verbundener plattenförmiger Hologrammträger 30 vorgesehen. Die beiden Hauptflächen 31 und 32 des plattenförmigen Hologrammträgers 30 weisen genau dieselbe Flächenausbildung bzw. Flächenform wie die der besagten ersten Körperhauptfläche 3 zugewandte erste Trägerhauptfläche 11 des Chipträgers 10 auf.

Bei der Chipkarte 1 gemäß den Figuren 1 und 2 ist unter Ausnützung des bei dieser Chipkarte 1 vorgesehenen plattenförmigen Hologrammträgers 30 auf sehr einfache Weise und ohne zusätzliche Mittel erreicht, daß der plattenförmige Chipträger 10 im Bereich seiner ersten Trägerhauptfläche 11 zur Gänze abgedeckt ist, weil der Hologrammträger 30 zum Abdecken des Chipträgers 10 ausgenützt ist, so daß eine kontaktlos betreibbare Chipkarte 1 erhalten ist, bei der der Chipträger 10 im Bereich seiner ersten Trägerhauptfläche 11 gut geschützt ist und die im Bereich des Chipträgers 10 ein gefälliges und einwandfreies Aussehen aufweist, das durch das an dem Hologrammträger 30 vorgesehene Hologramm bestimmt ist.

In der Figur 3 ist eine Chipkarte 1 als Datenträger gemäß einem zweiten Ausführungsbeispiel der Erfindung dargestellt. Die Chipkarte 1 gemäß der Figur 3 weist größtenteils denselben Aufbau wie die Chipkarte 1 gemäß den Figuren 1 und 2 auf. Ein wesentlicher Unterschied bei der Chipkarte 1 gemäß der Figur 3 gegenüber der Chipkarte 1 gemäß den Figuren 1 und 2 besteht aber darin, daß die abgestufte Ausnehmung 5 in ihrem der ersten Körperhauptfläche 3 zugewandten Bereich mit einem dritten Ausnehmungsbereich 34 versehen ist, der ebenfalls in einem Fräsvorgang hergestellt worden ist. Dieser dritte Ausnehmungsbereich 34 ist unter anderem durch eine weitere parallel zu der ersten Körperhauptfläche 3 verlaufende ringförmige Begrenzungsfläche 35 begrenzt.

Bei der Chipkarte 1 gemäß der Figur 3 ist nunmehr ein erst nach dem Einsetzen des Moduls 9 in die Ausnehmung 5 der Chipkarte 1 im Bereich von der der besagten ersten Körperhauptfläche 3 zugewandten ersten Trägerhauptfläche 11 des Chipträgers 10 mit dem Kartenkörper 2 und dem plattenförmigen Chipträger 10 verbundener plattenförmiger Hologrammträger 36 vorgesehen. Der Hologrammträger 36 ist von einer ersten Hauptfläche 37 und einer zweiten Hauptfläche 38 begrenzt. Der Hologrammträger 36 ist über eine zwischen seiner zweiten Hauptfläche 38 einerseits und der ringförmigen Begrenzungsfläche 35 des dritten Ausnehmungsbereiches 34 und der ersten Hauptfläche 11 des Chipträgers 10 andererseits vorgesehene, in der Figur 3 nicht separat dargestellte Klebeverbindung mit dem Kartenkörper 2 und dem plattenförmigen Chipträger 10 verbunden. Die beiden Hauptflächen 37 und 38 des plattenförmigen Hologrammträgers 36 überragen die der besagten ersten Körperhauptfläche 3 zugewandte erste Trägerhauptfläche 11 des Chipträgers 10 mit einem Randbereich entlang von deren gesamtem Umfang, wie dies zum Teil aus der Figur 3 ersichtlich ist.

Auch bei der Chipkarte 1 gemäß der Figur 3 ist auf einfache Weise und praktisch ohne zusätzliche Mittel erreicht, daß eine kontaktlos betreibbare Chipkarte 1 erhalten ist, bei der der Chipträger 10 im Bereich seiner ersten Trägerhauptfläche 11 gut geschützt ist und die im Bereich des Chipträgers 10 ein gefälliges und einwandfreies Aussehen aufweist. Bei der Chipkarte 1 gemäß der Figur 3 ist weiters vorteilhaft, daß der plattenförmige Hologrammträger 36 nicht nur zur Erzielung eines guten mechanischen Schutzes des Chipträgers 10 und eines gefälligen und einwandfreien Aussehens der Chipkarte 1 im Bereich des Chipträgers 10 ausgenützt wird, sondern daß der plattenförmige Hologrammträger 36 zusätzlich auch noch eine Abdichtfunktion erfüllt, so daß eine Chipkarte 1 mit einem besonders gut geschützten Modul 9 realisiert ist.

In der Figur 4 ist eine Chipkarte 1 als Datenträger gemäß einem dritten Ausführungsbeispiel der Erfindung dargestellt. Bei dieser Chipkarte 1 weist der Modul 9 zwei elastisch nachgiebig ausgebildete, in den Chipträger 10 eingesetzte stiftförmige Modulanschlußkontakte 18 und 19 auf, deren Länge nominal so gewählt ist, daß die beiden Modulanschlußkontakte 18 und 19 aufgrund ihrer elastischen Nachgiebigkeit verbogen sind und hierbei ausschließlich auf Basis ihrer elastischen Nachgiebigkeit mit den beiden Spulenanschlußkontakten 23 und 24 der Spule 25 in elektrisch leitender Verbindung stehen.

Bei der Chipkarte 1 gemäß der Figur 4 sind mit dem Chipträger 10 des Moduls 9 im Bereich seiner der ersten Körperhauptfläche 3 zugewandten ersten Trägerhauptfläche 11 vorgesehene weitere Modulanschlußkontakte verbunden, die zum Zusammenwirken mit von außerhalb der Chipkarte 1 mit ihnen in Kontaktverbindung bringbaren Gegenkontakten ausgebildet sind. Insgesamt sind bei der Chipkarte 1 gemäß der Figur 4 acht solcher weiterer Modulanschlußkontakte vorgesehen, von denen in der Figur 4 aber nur zwei weitere Modulanschlußkontakte 39 und 40 dargestellt sind. Die weiteren Modulanschlußkontakte sind - wie dies für die beiden weiteren Modulanschlußkontakte 39 und 40 aus der Figur 4 ersichtlich ist - über weitere Bonddrähte mit weiteren nicht dargestellten Chipanschlußkontakten (Pads) des Chips 13 verbunden, von denen in der Figur 4 die beiden weiteren Bonddrähte 41 und 42 dargestellt sind. Die weiteren Bonddrähte sind hierbei durch in dem Chipträger 10 vorgesehene Bohrungen hindurchgeführt, von denen in der Figur 4 zwei Bohrungen 43 und 44 dargestellt sind.

Bei dem als Bauteil vorgesehenen Chip 13 der Chipkarte 1 gemäß der Figur 4 handelt es sich um einen sogenannten Doppel-Zweck-Chip, dessen im Bereich der zweiten Trägerhauptfläche 12 vorgesehene Modulanschlußkontakte 18 und 19 mit den Spulenanschlußkontakten 23 und 24 der Spule 25 verbunden sind, die zum berührungslosen Datenaustausch zwischen dem Doppel-Zweck-Chip und einer Schreib/Lese-Station und gegebenenfalls zur berührungslosen Energieübertragung zu dem Doppel-Zweck-Chip vorgesehen ist, und dessen im Bereich der ersten Trägerhauptfläche 11 vorgesehene weitere Modulanschlußkontakte zum kontaktbehafteten Datenaustausch zwischen dem Doppel-Zweck-Chip und einer Schreib/Lese-Station und zur kontaktbehafteten Energieübertragung zu dem Doppel-Zweck-Chip vorgesehen sind.

Bei der Chipkarte 1 gemäß der Figur 4 ist ebenso wie bei der Chipkarte 1 gemäß der Figur 3 nunmehr ein erst nach dem Einsetzen des Moduls 9 in die Ausnehmung 5 der Chipkarte 1 im Bereich von der der besagten ersten Körperhauptfläche 3 zugewandten ersten Trägerhauptfläche 11 des Chipträgers 10 mit dem Kartenkörper 2 und dem plattenförmigen Chipträger 10 verbundener plattenförmiger Hologrammträger 36 vorgesehen. Der Hologrammträger 36 ist von einer ersten Hauptfläche 37 und einer zweiten Hauptfläche 38 begrenzt. Über seine von außerhalb der Chipkarte 1 sichtbare erste Hauptfläche 37 zeigt der Hologrammträger 36 ein in der Figur 4 nicht sichtbares Hologramm. Der Hologrammträger 36 ist über eine zwischen seiner zweiten Hauptfläche 38 einerseits und der ringförmigen Begrenzungsfläche 35 des dritten Ausnehmungsbereiches 34 und der ersten Hauptfläche 11 des Chipträgers 10 andererseits vorgesehene, in der Figur 4 nicht separat dargestellte Klebeverbindung mit dem Kartenkörper 2 und dem plattenförmigen Chipträger 10 verbunden. Die nicht dargestellte Klebeverbindung zwischen dem Kartenkörper 2 und dem plattenförmigen Chipträger 10 ist hierbei durch eine bei einem Prägevorgang hergestellte Klebeverbindung gebildet. Der vorerwähnte Prägevorgang dient zum Befestigen des Hologrammträgers 36 an der Chipkarte 1, wobei im vorliegenden Fall der dritte Ausnehmungsbereich 34 im Zuge dieses Prägevorganges gebildet worden ist.

Bei der Chipkarte 1 gemäß der Figur 4 überragen die beiden Hauptflächen 37 und 38 des plattenförmigen Hologrammträgers 36 die der besagten ersten Körperhauptfläche 3 zugewandte erste Trägerhauptfläche 11 des Chipträgers 10 entlang von deren gesamtem Umfang, wie dies zum Teil aus der Figur 4 ersichtlich ist. Auf diese Weise ist erreicht, daß bei der Chipkarte 1 gemäß der Figur 4 der plattenförmige Hologrammträger 36 nicht nur zur Erzielung eines guten mechanischen Schutzes des Chipträgers 10 bzw. der im Bereich der ersten Trägerhauptfläche 11 vorgesehenen Bestandteile, also der weiteren Modulanschlußkontakte des Chipträgers 10, und zur Erzielung eines gefälligen und einwandfreien Aussehens der Chipkarte 1 im Bereich des Chipträgers 10 ausgenützt wird, sondern daß der plattenförmige Hologrammträger 36 zusätzlich auch noch eine Abdichtfunktion erfüllt, so daß eine Chipkarte 1 mit einem besonders gut geschützten Modul 9 realisiert ist.

Bei der Chipkarte 1 gemäß der Figur 4 ist der plattenförmige Hologrammträger 36 mit Durchgängen versehen, von denen in der Figur 4 zwei Durchgänge 45 und 46 dargestellt sind. Die Durchgänge im plattenförmigen Hologrammträger 36 ermöglichen den Zugang zu den weiteren Modulanschlußkontakten, so daß durch diese Durchgänge hindurch Kontaktstifte einer Schreib/Lese-Einrichtung mit den größtenteils von dem plattenförmigen Hologrammträger 36 abgedeckten flächenförmigen weiteren Modulanschlußkontakten in elektrisch leitende Verbindung treten können.

Die Erfindung ist nicht auf die drei vorstehend beschriebenen Ausführungsbeispiele beschränkt. Die Erfindung kann auch bei einer Chipkarte zum Einsatz kommen, die nur zum Durchführen von einem kontaktbehafteten Betrieb ausgebildet ist und hierfür einen Modul zum Durchführen von einem kontaktbehafteten Betrieb aufweist, wobei dann der plattenförmige Chipträger des Moduls zum Durchführen von einem kontaktbehafteten Betrieb mit dem plattenförmigen Hologrammträger abgedeckt ist. Ein plattenförmiger Hologrammträger muß den unter ihm liegenden plattenförmigen Chipträger nicht unbedingt zur Gänze abdecken, sondern es kann aus optischen Gründen ein schmaler Randbereich des Chipträgers sichtbar sein. Die Erfindung kann auch bei einem Datenträger mit einem in einer Kunststoff-Spritzgußtechnik hergestellten Datenträgerkörper angewendet werden. Weiters ist noch festzuhalten, daß bei einem erfindungsgemäßen Datenträger zusätzlich zu dem den plattenförmigen Bauteilträger zumindest größtenteils abdeckenden plattenförmigen Hologrammträger auch noch mindestens ein weiterer Hologrammträger an dem Datenträger vorgesehen sein kann.

Die Erfindung bezieht sich auf einen Datenträger mit einem Datenträgerkörper, der von einer Körperfläche begrenzt ist und in dem eine in die besagte Körperfläche mündende Ausnehmung vorgesehen ist, in die ein Modul eingesetzt ist, der einen plattenförmigen Bauteilträger mit einer der besagten Körperfläche zugewandten ersten Trägerhauptfläche und mit einer von der besagten Körperfläche abgewandten zweiten Trägerhauptfläche und mindestens einen im Bereich von der von der besagten Körperfläche abgewandten zweiten Trägerhauptfläche an dem Bauteilträger angebrachten, in der Ausnehmung von dem Bauteilträger abgedeckten Bauteil aufweist, und wobei an dem Datenträger in dem Bereich von dessen besagter Körperfläche ein plattenförmiger Hologrammträger vorgesehen ist, der über seine von außerhalb des Datenträgers sichtbare Hauptfläche ein Hologramm zeigt.

Ein solcher als Chipkarte ausgebildeter Datenträger gemäß der eingangs im ersten Absatz angeführten Gattung ist in mannigfaltigen Ausbildungen gebräuchlich und allgemein bekannt, beispielsweise als sogenannte Kreditkarte bzw. Bankkarte im Bankenverkehr. Beispielsweise ist ein solcher als Chipkarte ausgebildeter Datenträger aus dem Dokument EP 0 709 805 A2 bekannt. Bei der bekannten Chipkarte liegt der in die - in eine erste Körperhauptfläche mündende - Ausnehmung eingesetzte Modul relativ nahe bei einem kurzen Kartenrand der Chipkarte und der Hologrammträger relativ nahe bei dem gegenüberliegenden kurzen Kartenrand der Chipkarte. Die bekannte Chipkarte und ihr in die Ausnehmung eingesetzter Modul sind zum Durchführen von ausschließlich einem kontaktbehafteten Betrieb ausgebildet, wofür ein als plattenförmiger Bauteilträger vorgesehener Chipträger an seiner von außen zugänglichen ersten Trägerhauptfläche mit flächenförmigen Anschlußkontakten versehen ist, die ein Kontaktfeld bilden, dessen Flächenform der Querschnittsfläche der in die erste Körperhauptfläche mündenden Ausnehmung entspricht. Die flächenförmigen Anschlußkontakte liegen hierbei vollkommen ungeschützt und frei zugänglich, so daß sie relativ leicht beschädigt werden können, was hinsichtlich einer einwandfreien Funktionstüchtigkeit und auch im Hinblick auf ein einwandfreies Aussehen nachteilig ist.

Ein solcher als Chipkarte ausgebildeter Datenträger gemäß der eingangs im ersten Absatz angeführten Gattung ist zwischenzeitlich auch aus der nachveröffentlichten, jedoch älteren deutschen Patentanmeldung gemäß DE 195 30 608 A1 bekanntgeworden. Bei dieser bekanntgewordenen Chipkarte handelt es sich ebenso um eine Chipkarte zum Durchführen von ausschließlich einem kontaktbehafteten Betrieb, deren in die Ausnehmung eingesetzter Modul ausschließlich zum Durchführen eines kontaktbehafteten Betriebes ausgebildet ist, wofür ein als plattenförmige Bauteilträger vorgesehener Chipträger an seiner von außen zugänglichen ersten Trägerhauptfläche mit flächenförmigen Anschlußkontakten versehen ist, die ein Kontaktfeld bilden, dessen Flächenform der Querschnittsfläche der in die erste Körperhauptfläche mündenden Ausnehmung entspricht. Von dieser bekanntgewordenen Chipkarte ist eine erste Ausführungsvariante geoffenbart, bei der die flächenförmigen Anschlußkontakte gänzlich mit einem holographischen Schutzsiegel abgedeckt sind, mit dem eine mißbräuchliche Verwendung dieser Chipkarte erkennbar bzw. signalisierbar ist, das aber durch sichtbare Zerstörung rückstandsfrei entfernbar ist, so daß nach einem solchen Entfernen die flächenförmigen Anschlußkontakte ebenso vollkommen ungeschützt und frei zugänglich sind, so daß sie relativ leicht beschädigt werden können, was hinsichtlich einer einwandfreien Funktionstüchtigkeit und auch im Hinblick auf ein einwandfreies Aussehen nachteilig ist. Von dieser bekanntgewordenen Chipkarte ist auch eine zweite Ausführungsvariante geoffenbart, bei der in dem größtenteils durch die flächenförmigen Anschlußkontakte gebildeten Kontaktfeld ein holographisches Schutzsiegel unlösbar aufgebracht ist, mit dem ein unerlaubtes Entfernen des Moduls aus der Chipkarte signalisierbar ist, das aber die flächenförmigen Anschlußkontakte im wesentlichen vollkommen unbedeckt läßt, so daß die flächenförmigen Anschlußkontakte hierbei ebenso vollkommen ungeschützt und frei zugänglich liegen, so daß sie relativ leicht beschädigt werden können, was hinsichtlich einer einwandfreien Funktionstüchtigkeit und auch im Hinblick auf ein einwandfreies Aussehen nachteilig ist.

Die Erfindung hat sich zur Aufgabe gestellt, ausgehend von einem Datenträger entsprechend der eingangs im ersten Absatz angeführten Gattung einen verbesserten Datenträger zu schaffen, der sowohl gegenüber dem vorstehend beschriebenen bekannten Datenträger als auch gegenüber dem vorstehend beschriebenen bekanntgewordenen Datenträger neu ist und zusätzlich Vorteile bietet. Zur Lösung dieser Aufgabe ist bei einem Datenträger entsprechend der eingangs im ersten Absatz angeführten Gattung erfindungsgemäß vorgesehen, daß der Datenträger zum Durchführen von ausschließlich einem kontaktlosen Betrieb ausgebildet ist, dessen Modul einen Bauteilträger aufweist, der im Bereich seiner ersten Trägerhauptfläche kontaktlos ausgebildet ist, und daß der plattenförmige Hologrammträger den plattenförmigen Bauteilträger des Moduls im Bereich von dessen der besagten Körperfläche zugewandten ersten Trägerhauptfläche überdeckend an dem Datenträger vorgesehen ist und diesen plattenförmigen Bauteilträger zumindest größtenteils abdeckt. Auf diese Weise ist erreicht, daß bei einem ausschließlich auf kontaktlose Art und Weise auslesbaren Datenträger die der besagten Körperfläche zugewandte erste Trägerhauptfläche des plattenförmigen Bauteilträgers, die hierbei kontaktlos ausgebildet ist, zumindest größtenteils mit Hilfe des plattenförmigen Hologrammträgers abgedeckt ist, so daß der plattenförmige Bauteilträger - an dem hierbei keine Anschlußkontakte im Bereich von seiner ersten Trägerhauptfläche vorgesehen sind und der aus Platzspargründen, um in dem Datenträger ausreichend Raum für eine für die kontaktlose Kommunikation erforderliche Übertragungsspule zu haben, besonders dünn ausgebildet sein kann - mit Hilfe des plattenförmigen Hologrammträgers mechanisch gut geschützt ist. Weiters erfüllt bei einem solchen kontaktlos betreibbaren Datenträger der plattenförmige Hologrammträger nicht nur eine mechanische Schutzfunktion für den plattenförmigen Bauteilträger, sondern auch eine optische Abdeckfunktion, da mit Hilfe des von dem plattenförmigen Hologrammträger gezeigten Hologrammes die sonst eher nicht besonders ansehnliche erste Trägerhauptfläche des plattenförmigen Bauteilträgers zumindest größtenteils abgedeckt ist.

Bei einem erfindungsgemäßen Datenträger hat es sich als vorteilhaft erwiesen, wenn der plattenförmige Hologrammträger mit seiner ein Hologramm zeigenden Hauptfläche die der besagten Körperfläche zugewandte, kontaktlos ausgebildete erste Trägerhauptfläche des Bauteilträgers vollständig abdeckt. Auf diese Weise ist der Bauteilträger im Bereich von seiner gesamten ersten Trägerhauptfläche geschützt und abgedeckt, wodurch ein besonders guter Schutz erreicht ist.

Bei einem wie vorstehend angeführten erfindungsgemäßen Datenträger hat es sich als sehr vorteilhaft erwiesen, wenn die der besagten Körperfläche zugewandte, kontaktlos ausgebildete erste Trägerhauptfläche des plattenförmigen Bauteilträgers und die ein Hologramm zeigende Hauptfläche des plattenförmigen Hologrammträgers eine vollkommen identische Flächenausbildung aufweisen und wenn der Hologrammträger ausschließlich mit dem Bauteilträger verbunden ist. Eine solche Ausbildung eines erfindungsgemäßen Datenträgers ist deshalb vorteilhaft, weil der Hologrammträger bereits vor dem Einsetzen eines Moduls in die Ausnehmung des Datenträgers mit dem Bauteilträger dieses Moduls verbunden werden kann.

Bei einem erfindungsgemäßen Datenträger hat sich aber auch als vorteilhaft erwiesen, wenn der plattenförmige Hologrammträger mit einem Randbereich seiner ein Hologramm zeigenden Hauptfläche die der besagten Körperfläche zugewandte, kontaktlos ausgebildete erste Trägerhauptfläche des Bauteilträgers entlang von deren gesamtem Umfang überragt und hierbei der Hologrammträger mit dem Bauteilträger und zusätzlich mit seinem Randbereich mit dem Datenträgerkörper verbunden ist. Auf diese Weise ist erreicht, daß der Hologrammträger nicht nur für eine mechanische Schutzfunktion für den Bauteilträger des Moduls eines erfindungsgemäßen Datenträgers ausgenützt wird, sondern zusätzlich auch noch eine Abdichtfunktion erfüllt, so daß ein Datenträger mit einem besonders gut geschützten Modul realisiert ist.

Erfindungsgemäße Datenträger können unterschiedlichen Zwecken dienen und verschiedene Formen aufweisen, beispielsweise eine Schlüsselform, eine Stabform oder auch andere Formen. Eine besonders bevorzugte Variante eines erfindungsgemäßen Datenträgers ist dadurch gekennzeichnet, daß der Datenträger als Chipkarte ausgebildet ist.

Die vorstehend angeführte Aspekte und weitere Aspekte der Erfindung gehen aus den nachfolgend beschriebenen Ausführungsbeispielen hervor und sind anhand dieser Ausführungsbeispiele erläutert.

Die Erfindung wird im folgenden anhand von zwei in den Zeichnungen dargestellten Ausführungsbeispielen weiter erläutert, auf die die Erfindung aber nicht beschränkt ist.

Die Figur 1 zeigt in einer Draufsicht eine Chipkarte als Datenträger gemäß einem Ausführungsbeispiel der Erfindung, die zum Durchführen von ausschließlich einem kontaktlosen Betrieb ausgebildet ist und in die ein Modul eingesetzt ist, der als plattenförmigen Bauteilträger einen plattenförmigen Chipträger und einen an dem Chipträger als Bauteil angebrachten Chip und einen bereits vor dem Einsetzen des Moduls in die Chipkarte mit dem plattenförmigen Chipträger verbundenen plattenförmigen Hologrammträger aufweist.

Die Figur 2 zeigt in einem Querschnitt gemäß der Linie II-II in der Figur 1 einen Teil der Chipkarte gemäß der Figur 1, der den in die Chipkarte eingesetzten Modul enthält, an dessen plattenförmigem Chipträger der plattenförmige Hologrammträger angebracht ist, dessen Hauptfläche dieselbe Flächenform wie die Trägerhauptflächen des Chipträgers aufweisen.

Die Figur 3 zeigt auf analoge Weise wie die Figur 2 einen Teil einer Chipkarte als Datenträger gemäß einem zweiten Ausführungsbeispiel der Erfindung, die zum Durchführen von ausschließlich einem kontaktlosen Betrieb ausgebildet ist und in die ein Modul eingesetzt ist, dessen als Bauteilträger vorgesehener Chipträger von einem plattenförmigen Hologrammträger abgedeckt ist, dessen Hauptfläche die ihm zugewandte Trägerhauptfläche des Chipträgers entlang von deren gesamtem Umfang überragt.

In den Figuren 1 und 2 ist eine einen Datenträger bildende Chipkarte 1 dargestellt, die als Datenträgerkörper einen in einem Laminiervorgang hergestellten Kartenkörper 2 aufweist. Der Kartenkörper 2 ist unter anderem von einer ersten Körperhauptfläche 3 und von einer zweiten Körperhauptfläche 4 begrenzt. In dem Kartenkörper 2 ist eine abgestufte Ausnehmung 5 vorgesehen, die durch eine Materialabtragung hergestellt worden ist. Vorteilhafterweise ist die abgestufte Ausnehmung 5 in einem Fräsvorgang hergestellt worden; es kommen aber auch andere geeignete Techniken in Frage, etwa Ätztechniken oder Lasertechniken. Die abgestufte Ausnehmung 5 weist einen an die erste Körperhauptfläche 3 angrenzenden, im Querschnitt größeren ersten Ausnehmungsbereich 6, der unter anderem durch eine parallel zu der ersten Körperhauptfläche 3 verlaufende ringförmige Begrenzungsfläche 7 begrenzt ist, und einen an den ersten Ausnehmungsbereich 6 an dessen von der ersten Körperhauptfläche 3 abgewandter Seite anschließenden, im Querschnitt kleineren zweiten Ausnehmungsbereich 8 auf. Wie aus der Figur 2 ersichtlich ist, mündet die abgestufte Ausnehmung 5 in die besagte erste Körperhauptfläche 3.

Die Chipkarte 1 gemäß den Figuren 1 und 2 ist zum Durchführen von ausschließlich einem kontaktlosen Betrieb ausgebildet. Dementsprechend ist in die abgestufte Ausnehmung 5 ein zum Durchführen von ausschließlich einem kontaktlosen Betrieb ausgebildeter Modul 9 eingesetzt. Der Modul 9 weist als Bauteilträger einen plattenförmigen Chipträger 10 auf, der der durch eine Printplatte gebildet ist und der unter anderem von einer der besagten ersten Körperhauptfläche 3 zugewandten, kontaktlos ausgebildeten ersten Trägerhauptfläche 11 und von einer von der besagten ersten Körperhauptfläche 3 abgewandten zweiten Trägerhauptfläche 12 begrenzt ist. Weiters weist der Modul 9 als Bauteil einen im Bereich von der von der besagten ersten Körperhauptfläche 3 abgewandten zweiten Trägerhauptfläche 12 an dem plattenförmigen Chipträger 10 angebrachten, in der Ausnehmung 5 von dem plattenförmigen Chipträger 10 abgedeckten Chip 13 auf. An dem Chipträger 10 können zusätzlich auch noch andere Bauteile vorgesehen sein. Der Chip 13 ist mit zwei Chipanschlußkontakten 14 und 15 versehen. Die beiden Chipanschlußkontakte 14 und 15, die in Fachkreisen häufig auch als Pads bezeichnet werden, sind über zwei sogenannte Bonddrähte 16 und 17 mit zwei plattenförmigen Modulanschlußkontakten 18 und 19 elektrisch leitend verbunden. Die beiden Modulanschlußkontakte 18 und 19 sind beispielsweise durch Leiterbahnen gebildet, die an dem als Printplatte ausgebildeten Chipträger 10 im Bereich von dessen zweiter Trägerhauptfläche 12 vorgesehen sind. Die beiden Modulanschlußkontakte 18 und 19 sind über ein elektrisch leitendes Klebemittel 20, das je in einem in dem Kartenkörper 2 vorgesehenen, den Kartenkörper 2 teilweise durchsetzenden Kanal 21 und 22 aufgenommen ist, mit zwei Spulenanschlußkontakten 23 und 24 einer in dem Kartenkörper 2 enthaltenen Sende/Empfangs-Spule 25 verbunden. Die beiden Kanäle 21 und 22 sind vorteilhafterweise ebenso wie die abgestufte Ausnehmung 5 in einem Fräsvorgang hergestellt worden. Von der Sende/Empfangs-Spule 25 sind in der Figur 2 weiters auch ihre Spulenwindungen 26 dargestellt. Die Sende/Empfangs-Spule 25 dient unter anderem zum kontaktlosen induktiven Übertragen von Daten zwischen einer externen Sende/Empfangs-Einrichtung und dem in der Chipkarte 1 enthaltenen Chip 13. Weiters dient die Sende/Empfangs-Spule 25 auch zum Empfangen eines Wechselsignales, das in dem Chip 13 zur Gewinnung einer Gleichspannung ausgenützt wird, mit der der Chip 13 versorgt wird, um die vorerwähnte Übertragung von Daten zu dem Chip 13 bzw. von dem Chip 13 zu ermöglichen.

Zu erwähnen bleibt noch, daß bei der Chipkarte 1 im Bereich der ringförmigen Begrenzungsfläche 7 des größeren Ausnehmungsbereiches 6 eine Schicht 27 aus einem sogenannten Heißschmelz-Klebemittel vorgesehen ist, die eine Klebeverbindung zwischen der zweiten Trägerhauptfläche 12 des Chipträgers 10 und dem Kartenkörper 2 bildet, wodurch der gesamte Modul 9 an dem Kartenkörper 2 festgehalten ist. Weiters bleibt noch zu erwähnen, daß die beiden Kanäle 21 und 22 je mit einer von dem betreffenden Kanal 21 bzw. 22 seitlich abstehenden Tasche 28 und 29 versehen sind, die zum Aufnehmen von überschüssigem elektrisch leitendem Klebemittel 20 dienen, wie dies in der Figur 2 schematisch dargestellt ist.

Wie aus der vorstehenden Beschreibung ersichtlich ist, ist bei der Chipkarte 1 gemäß den Figuren 1 und 2 ein Betrieb derselben, nämlich eine Datenübertragung zu ihrem Chip 13 bzw. von ihrem Chip 13, ausschließlich auf kontaktlose Weise mit Hilfe der mit dem Chip 13 elektrisch leitend verbundenen Sende/Empfangs-Spule 25 möglich. Die Chipkarte 1 und ihr Modul 9 sind dementsprechend zum Durchführen von ausschließlich einem kontaktlosen Betrieb ausgebildet.

Bei der Chipkarte 1 gemäß den Figuren 1 und 2 ist an der Chipkarte 1 im Bereich von deren erster Körperhauptfläche 3 weiters ein plattenförmiger Hologrammträger 30 vorgesehen. Der Hologrammträger 30 weist eine von außerhalb der Chipkarte 1 sichtbare erste Hauptfläche 31 und eine der ersten Hauptfläche 31 gegenüberliegende zweite Hauptfläche 32 auf. Über seine von außerhalb der Chipkarte 1 sichtbare erste Hauptfläche 31 zeigt der Hologrammträger 30 ein Hologramm 33, das beispielsweise ein Portrait eines Menschen zeigt, wie dies in der Figur 1 angedeutet ist.

Bei der Chipkarte 1 gemäß den Figuren 1 und 2 ist nunmehr vorteilhafterweise der plattenförmige Hologrammträger 30 an der Chipkarte 1 in der Weise vorgesehen, daß der plattenförmige Hologrammträger 30 den plattenförmigen Chipträger 10 im Bereich von dessen der besagten ersten Körperhauptfläche 3 zugewandten ersten Trägerhauptfläche 11 überdeckt. Hierbei deckt der plattenförmige Hologrammträger 30 den plattenförmigen Chipträger 10 im vorliegenden Fall vollständig ab. Der plattenförmige Hologrammträger 30 ist hierbei mittels einer zwischen seiner zweiten Hauptfläche 32 und der ersten Trägerhauptfläche 11 des Chipträgers 10 vorgesehenen, in der Figur 2 nicht separat dargestellten Klebeverbindung mit dem Chipträger 10 verbunden. Vorteilhafterweise ist bei der Chipkarte 1 gemäß den Figuren 1 und 2 ein bereits vor dem Einsetzen des Moduls 9 in die abgestufte Ausnehmung 5 der Chipkarte 1 im Bereich von der der besagten ersten Körperhauptfläche 3 zugewandten ersten Trägerhauptfläche 11 mit dem plattenförmigen Chipträger 10 verbundener plattenförmiger Hologrammträger 30 vorgesehen. Die beiden Hauptflächen 31 und 32 des plattenförmigen Hologrammträgers 30 weisen genau dieselbe Flächenausbildung bzw. Flächenform wie die der besagten ersten Körperhauptfläche 3 zugewandte erste Trägerhauptfläche 11 des Chipträgers 10 auf.

Bei der Chipkarte 1 gemäß den Figuren 1 und 2 ist unter Ausnützung des bei dieser Chipkarte 1 vorgesehenen plattenförmigen Hologrammträgers 30 auf sehr einfache Weise und ohne zusätzliche Mittel erreicht, daß der plattenförmige Chipträger 10 im Bereich seiner ersten Trägerhauptfläche 11 zur Gänze abgedeckt ist, weil der Hologrammträger 30 zum Abdecken des Chipträgers 10 ausgenützt ist, so daß eine kontaktlos betreibbare Chipkarte 1 erhalten ist, bei der der Chipträger 10 im Bereich seiner ersten Trägerhauptfläche 11 gut geschützt ist und die im Bereich des Chipträgers 10 ein gefälliges und einwandfreies Aussehen aufweist, das durch das an dem Hologrammträger 30 vorgesehene Hologramm bestimmt ist.

In der Figur 3 ist eine Chipkarte 1 als Datenträger gemäß einem zweiten Ausführungsbeispiel der Erfindung dargestellt. Die Chipkarte 1 gemäß der Figur 3 weist größtenteils denselben Aufbau wie die Chipkarte 1 gemäß den Figuren 1 und 2 auf. Ein wesentlicher Unterschied bei der Chipkarte 1 gemäß der Figur 3 gegenüber der Chipkarte 1 gemäß den Figuren 1 und 2 besteht aber darin, daß die abgestufte Ausnehmung 5 in ihrem der ersten Körperhauptfläche 3 zugewandten Bereich mit einem dritten Ausnehmungsbereich 34 versehen ist, der ebenfalls in einem Fräsvorgang hergestellt worden ist. Dieser dritte Ausnehmungsbereich 34 ist unter anderem durch eine weitere parallel zu der ersten Körperhauptfläche 3 verlaufende ringförmige Begrenzungsfläche 35 begrenzt.

Bei der Chipkarte 1 gemäß der Figur 3 ist nunmehr ein erst nach dem Einsetzen des Moduls 9 in die Ausnehmung 5 der Chipkarte 1 im Bereich von der der besagten ersten Körperhauptfläche 3 zugewandten ersten Trägerhauptfläche 11 des Chipträgers 10 mit dem Kartenkörper 2 und dem plattenförmigen Chipträger 10 verbundener plattenförmiger Hologrammträger 36 vorgesehen. Der Hologrammträger 36 ist von einer ersten Hauptfläche 37 und einer zweiten Hauptfläche 38 begrenzt. Der Hologrammträger 36 ist über eine zwischen seiner zweiten Hauptfläche 38 einerseits und der ringförmigen Begrenzungsfläche 35 des dritten Ausnehmungsbereiches 34 und der ersten Hauptfläche 11 des Chipträgers 10 andererseits vorgesehene, in der Figur 3 nicht separat dargestellte Klebeverbindung mit dem Kartenkörper 2 und dem plattenförmigen Chipträger 10 verbunden. Die beiden Hauptflächen 37 und 38 des plattenförmigen Hologrammträgers 36 überragen die der besagten ersten Körperhauptfläche 3 zugewandte erste Trägerhauptfläche 11 des Chipträgers 10 mit einem Randbereich entlang von deren gesamtem Umfang, wie dies zum Teil aus der Figur 3 ersichtlich ist.

Auch bei der Chipkarte 1 gemäß der Figur 3 ist auf einfache Weise und praktisch ohne zusätzliche Mittel erreicht, daß eine kontaktlos betreibbare Chipkarte 1 erhalten ist, bei der der Chipträger 10 im Bereich seiner ersten Trägerhauptfläche 11 gut geschützt ist und die im Bereich des Chipträgers 10 ein gefälliges und einwandfreies Aussehen aufweist. Bei der Chipkarte 1 gemäß der Figur 3 ist weiters vorteilhaft, daß der plattenförmige Hologrammträger 36 nicht nur zur Erzielung eines guten mechanischen Schutzes des Chipträgers 10 und eines gefälligen und einwandfreien Aussehens der Chipkarte 1 im Bereich des Chipträgers 10 ausgenützt wird, sondern daß der plattenförmige Hologrammträger 36 zusätzlich auch noch eine Abdichtfunktion erfüllt, so daß eine Chipkarte 1 mit einem besonders gut geschützten Modul 9 realisiert ist.

Die Erfindung ist nicht auf die zwei vorstehend beschriebenen Ausführungsbeispiele beschränkt. Ein plattenförmiger Hologrammträger muß den unter ihm liegenden plattenförmigen Chipträger nicht unbedingt zur Gänze abdecken, sondern es kann aus optischen Gründen ein schmaler Randbereich des Chipträgers sichtbar sein. Die Erfindung kann auch bei einem Datenträger mit einem in einer Kunststoff-Spritzgußtechnik hergestellten Datenträgerkörper angewendet werden. Weiters ist noch festzuhalten, daß bei einem erfindungsgemäßen Datenträger zusätzlich zu dem den plattenförmigen Bauteilträger zumindest größtenteils abdeckenden plattenförmigen Hologrammträger auch noch mindestens ein weiterer Hologrammträger an dem Datenträger vorgesehen sein kann.

## Patentansprüche (Patentansprüche für folgende(n) Vertragsstaat(en): AT, CH, ES, FR, GB, IT, LI, NL)

1. Datenträger (1) mit einem Datenträgerkörper (2), der von einer Körperfläche (3) begrenzt ist und in dem eine in die besagte Körperfläche (3) mündende Ausnehmung (5) vorgesehen ist, in die ein Modul (9) eingesetzt ist, der einen plattenförmigen Bauteilträger (10) mit einer der besagten Körperfläche (3) zugewandten ersten Trägerhauptfläche (11) und mit einer von der besagten Körperfläche (3) abgewandten zweiten Trägerhauptfläche (12) und mindestens einen im Bereich von der von der besagten Körperfläche (3) abgewandten zweiten Trägerhauptfläche (12) an dem Bauteilträger (10) angebrachten, in der Ausnehmung (5) von dem Bauteilträger (10) abgedeckten Bauteil (13) aufweist, und wobei an dem Datenträger (1) in dem Bereich von dessen besagter Körperfläche (3) ein plattenförmiger Hologrammträger (30; 36) vorgesehen ist, der über seine von außerhalb des Datenträgers (1) sichtbare Hauptfläche (31; 37) ein Hologramm (33) zeigt, dadurch gekennzeichnet, daß der plattenförmige Hologrammträger (30; 36) den plattenförmigen Bauteilträger (10) des Moduls (9) im Bereich von dessen der besagten Körperfläche (3) zugewandten ersten Trägerhauptfläche (11) überdeckend an dem Datenträger (1) vorgesehen ist und diesen plattenförmigen Bauteilträger (10) zumindest größtenteils abdeckt.

2. Datenträger (1) nach Anspruch 1, dadurch gekennzeichnet, daß die der besagten Körperfläche (3) zugewandte erste Trägerhauptfläche (11) des plattenförmigen Bauteilträgers (10) und die ein Hologramm (33) zeigende Hauptfläche (31) des plattenförmigen Hologrammträgers (30) eine vollkommen identische Flächenausbildung aufweisen und daß der Hologrammträger (30) ausschließlich mit dem Bauteilträger (10) verbunden ist.

3. Datenträger (1) nach Anspruch 1, dadurch gekennzeichnet, daß der plattenförmige Hologrammträger (36) mit einem Randbereich seiner ein Hologramm (33) zeigenden Hauptfläche (37) die der besagten Körperfläche (3) zugewandte erste Trägerhauptfläche (11) des Bauteilträgers (10) entlang von deren gesamtem Umfang überragt und hierbei der Hologrammträger (36) mit dem Bauteilträger (10) und zusätzlich mit seinem Randbereich mit dem Datenträgerkörper (2) verbunden ist.

4. Datenträger (1) nach einem der Ansprüche 1 bis 3, dadurch gekennzeichnet, daß der Datenträger (1) zum Durchführen von ausschließlich einem kontaktlosen Betrieb ausgebildet ist, dessen Modul (9) einen Bauteilträger (10) aufweist, der im Bereich seiner ersten Trägerhauptfläche (11) kontaktlos ausgebildet ist.

5. Datenträger (1) nach Anspruch 4, dadurch gekennzeichnet, daß der plattenförmige Hologrammträger (30; 36) mit seiner ein Hologramm (33) zeigenden Hauptfläche (31; 37) die der besagten Körperfläche (3) zugewandte erste Trägerhauptfläche (11) des Bauteilträgers (10) vollständig abdeckt.

6. Datenträger (1) nach einem der Ansprüche 1 bis 5, dadurch gekennzeichnet, daß der Datenträger (1) als Chipkarte ausgebildet ist.

## Patentansprüche (Patentansprüche für folgende(n) Vertragsstaat(en): DE)

1. Datenträger (1) mit einem Datenträgerkörper (2), der von einer Körperfläche (3) begrenzt ist und in dem eine in die besagte Körperfläche (3) mündende Ausnehmung (5) vorgesehen ist, in die ein Modul (9) eingesetzt ist, der einen plattenförmigen Bauteilträger (10) mit einer der besagten Körperfläche (3) zugewandten ersten Trägerhauptfläche (11) und mit einer von der besagten Körperfläche (3) abgewandten zweiten Trägerhauptfläche (12) und mindestens einen im Bereich von der von der besagten Körperfläche (3) abgewandten zweiten Trägerhauptfläche (12) an dem Bauteilträger (10) angebrachten, in der Ausnehmung (5) von dem Bauteilträger (10) abgedeckten Bauteil (13) aufweist, und wobei an dem Datenträger (1) in dem Bereich von dessen besagter Körperfläche (3) ein plattenförmiger Hologrammträger (30; 36) vorgesehen ist, der über seine von außerhalb des Datenträgers (1) sichtbare Hauptfläche (31; 37) ein Hologramm (33) zeigt, dadurch gekennzeichnet, daß der Datenträger (1) zum Durchführen von ausschließlich einem kontaktlosen Betrieb ausgebildet ist, dessen Modul (9) einen Bauteilträger (10) aufweist, der im Bereich seiner ersten Trägerhauptfläche (11) kontaktlos ausgebildet ist, und daß der plattenförmige Hologrammträger (30; 36) den plattenförmigen Bauteilträger (10) des Moduls (9) im Bereich von dessen der besagten Körperfläche (3) zugewandten ersten Trägerhauptfläche (11) überdeckend an dem Datenträger (1) vorgesehen ist und diesen plattenförmigen Bauteilträger (10) zumindest größtenteils abdeckt.

2. Datenträger (1) nach Anspruch 1, dadurch gekennzeichnet, daß der plattenförmige Hologrammträger (30; 36) mit seiner ein Hologramm (33) zeigenden Hauptfläche (31; 37) die der besagten Körperfläche (3) zugewandte, kontaktlos ausgebildete erste Trägerhauptfläche (11) des Bauteilträgers (10) vollständig abdeckt.

3. Datenträger (1) nach Anspruch 2, dadurch gekennzeichnet, daß die der besagten Körperfläche (3) zugewandte, kontaktlos ausgebildete erste Trägerhauptfläche (11) des plattenförmigen Bauteilträgers (10) und die ein Hologramm (33) zeigende Hauptfläche (31) des plattenförmigen Hologrammträgers (30) eine vollkommen identische Flächenausbildung aufweisen und daß der Hologrammträger (30) ausschließlich mit dem Bauteilträger (10) verbunden ist.

4. Datenträger (1) nach Anspruch 2, dadurch gekennzeichnet, daß der plattenförmige Hologrammträger (36) mit einem Randbereich seiner ein Hologramm zeigenden Hauptfläche (37) die der besagten Körperfläche (3) zugewandte, kontaktlos ausgebildete erste Trägerhauptfläche (11) des Bauteilträgers (10) entlang von deren gesamtem Umfang überragt und hierbei der Hologrammträger (36) mit dem Bauteilträger (10) und zusätzlich mit seinem Randbereich mit dem Datenträgerkörper (2) verbunden ist.

5. Datenträger (1) nach einem der Ansprüche 1 bis 4, dadurch gekennzeichnet, daß der Datenträger (1) als Chipkarte ausgebildet ist.

## Claims (Claims for the following Contracting State(s): AT, CH, LI, ES, FR, GB, IT, NL)

1. A data carrier (1) having a data carrier body (2) bounded by a body surface (3) and formed with a recess (5) which terminates in said body surface (3) and which accommodates a module (9), which module comprises a plate-shaped component carrier (10) having a first carrier main surface (11), which faces said body surface (3), and having a second carrier surface (12), which is remote from said body surface (3), and at least one component (13) mounted on the component carrier (10) in the area of the second carrier main surface (12) which is remote from said body surface (3) in the recess (5), covered by the component carrier (10), the data carrier (1) having a plate-shaped hologram carrier (30; 36) in the area of said body surface (3) of the data carrier, which hologram carrier carries a hologram (33) on its main surface (31; 37) which is visible from outside the data carrier (1), characterized in that the plate-shaped hologram carrier (30; 36), which covers the plate-shaped component carrier (10) of the module (9) in the area of its first carrier main surface (11) which faces said body surface (3), is arranged on the data carrier (1) and covers this plate-shaped component carrier (10) at least for the greater part.

2. A data carrier (1) as claimed in Claim 1, characterized in that the first carrier main surface (11) of the plate-shaped component carrier (10), which surface faces said body surface (3), and the main surface (31) of the plate-shaped hologram carrier (30), which last-mentioned main surface carries a hologram (33), have wholly identical outlines, and the hologram carrier (30) is connected exclusively to the component carrier (10).

3. A data carrier (1) as claimed in Claim 1, characterized in that the plate-shaped hologram carrier (36) projects from the first carrier main surface (11) of the component carrier (10), which first carrier main surface faces said body surface (3), along the entire circumference of this first carrier main surface with a peripheral area of its main surface (37) which carries a hologram (33) and the hologram carrier (36) is connected to the component carrier (10) and, in addition, to the data carrier body (2) in its peripheral area.

4. A data carrier as claimed in any one of the Claims 1 to 3, characterized in that the data carrier (1) is constructed exclusively for contactless operation, its module (9) comprising a component carrier (10) which is contactless in the area of its first carrier main surface (11).

5. A data carrier (1) as claimed in Claim 4, characterized in that with its main surface (31; 37), which carries a hologram (33), the plate-shaped hologram carrier (30; 36) completely covers the first carrier main surface (11) of the component carrier (10), which first carrier main surface faces said body surface (3).

6. A data carrier (1) as claimed in any one of the Claims 1 to 5, characterized in that the data carrier (1) is constructed as a chip card.

## Claims (Claims for the following Contracting State(s): DE)

1. A data carrier (1) having a data carrier body (2) bounded by a body surface (3) and formed with a recess (5) which terminates in said body surface (3) and which accommodates a module (9), which module comprises a plate-shaped component carrier (10) having a first carrier main surface (11), which faces said body surface (3), and having a second carrier surface (12), which is remote from said body surface (3), and at least one component (13) mounted on the component carrier (10) in the area of the second carrier main surface (12) which is remote from said body surface (3) in the recess (5), covered by the component carrier (10), the data carrier (1) having a plate-shaped hologram carrier (30; 36) in the area of said body surface (3) of the data carrier, which hologram carrier carries a hologram (33) on its main surface (31; 37) which is visible from outside the data carrier (1), characterized in that the data carrier (1) is constructed exclusively for contactless operation, its module (9) having a component carrier (10) which is contactless in the area of its first carrier main surface (11), and the plate-shaped hologram carrier (30; 36), which covers the plate-shaped component carrier (10) of the module (9) in the area of its first carrier main surface (11) which faces said body surface (3), is arranged on the data carrier (1) and covers this plate-shaped component carrier (10) at least for the greater part.

2. A data carrier (1) as claimed in Claim 1, characterized in that with its main surface (31; 37), which carries a hologram (33), the plate-shaped hologram carrier (30; 36) completely covers the first carrier main surface (11) of the component carrier (10), which first carrier main surface faces said body surface (3) and is of a contactless construction.

3. A data carrier (1) as claimed in Claim 2, characterized in that the first carrier main surface (11) of the plate-shaped component carrier (10), which surface faces said body surface (3) and is of a contacless construction, and the main surface (31) of the plate-shaped hologram carrier (30), which last-mentioned main surface carries a hologram (33), have wholly identical outlines, and the hologram carrier (30) is connected exclusively to the component carrier (10).

4. A data carrier (1) as claimed in Claim 2, characterized in that the plate-shaped hologram carrier (36) projects from the first carrier main surface (11) of the component carrier (10), which first carrier main surface faces said body surface (3) and is of a contacless construction, along the entire circumference of this first carrier main surface with a peripheral area of its main surface (37) which carries a hologram and the hologram carrier (36) is connected to the component carrier (10) and, in addition, to the data carrier body (2) in its peripheral area.

5. A data carrier (1) as claimed in any one of the Claims 1 to 4, characterized in that the data carrier (1) is constructed as a chip card.

## Revendications (Revendications pour l'(les) Etat(s) contractant(s) suivant(s): AT, CH, ES, FR, GB, IT, LI, NL)

1. Support de données (1) avec un corps de support de données (2) qui est délimité par une surface de corps (3) et dans lequel est prévu un évidement (5) débouchant dans ladite surface de corps (3) dans lequel est inséré un module (9) qui présente un support de pièce (10) en forme de plaque avec une première surface principale de support (11) tournée vers ladite surface de corps (3) et avec une deuxième surface principale de support (12) opposée à ladite surface de corps (3) et au moins une pièce (13) recouverte dans l'évidement (5) par le support de pièce (10) et appliqué sur le support de pièce (10) dans la région de la deuxième surface principale de support (12) opposée à ladite surface de corps (3) et un support d'hologramme (30 ; 36) en forme de plaque qui présente un hologramme (33) sur sa surface principale (31, 37) visible de l'extérieur de support de données (1) étant prévu sur le support données (1) dans la région de sa dite surface de corps (3), caractérisé en ce que le support d'hologramme (30 ; 36) en forme de plaque est prévu sur le support de données (1) en chevauchant le support de pièce (10) en forme de plaque du module (9) dans la région de sa première surface principale de support (11) tournée vers ladite surface de corps (3) et recouvre du moins en grande partie ce support de pièce en forme de plaque (10).

2. Support de données (1) selon la revendication 1, caractérisé en ce que la première surface principale de support (11) du support de pièce (10) en forme de plaque tournée vers ladite surface de corps (3) et la surface principale (31) du support d'hologramme (30) en forme de plaque montrant un hologramme (33) présentent une conception de surface absolument identique et que le support d'hologramme (30) est exclusivement fixé au support de pièce (10).

3. Support de données (1) selon la revendication 1, caractérisé en ce que le support d'hologramme (36) en forme de plaque est fixé avec une zone de bordure de sa surface principale (37) présentant un hologramme (33) qui déborde de la première surface principale de support (11) du support de pièce (10) tournée vers ladite surface de corps (3) le long de toute sa périphérie et le support d'hologramme (36) est à cette occasion fixé au support de pièce (10) et par ailleurs à sa zone de bordure avec le corps de support de données (2).

4. Support de données (1) selon l'une des revendications 1 à 3, caractérisé en ce que le support de données (1) est conçu en vue de l'exécution d'un fonctionnement exclusivement sans contact dont le module (9) présente un support de pièce (10) qui est conçu sans contact dans la région de sa première surface principale de support (11).

5. Support de données (1) selon la revendication 4, caractérisé en ce que le support d'hologramme (30, 36) en forme de plaque recouvre complètement avec sa surface principale (31 ; 37) présentant un hologramme (33) la première surface principale de support (11) du support de pièce (10) tournée vers ladite surface de corps (3).

6. Support de données (1) selon l'une des revendications 1 à 5 caractérisé en ce que le support de données (1) est conçu comme une carte à puce.

## Revendications (Revendications pour l'(les) Etat(s) contractant(s) suivant(s): DE)

1. Support de données (1) avec un corps de support de données (2) qui est délimité par une surface de corps (3) et dans lequel est prévu un évidement (5) débouchant dans ladite surface de corps (3) dans lequel est inséré un module (9) qui présente un support de pièce (10) en forme de plaque avec une première surface principale de support (11) tournée vers ladite surface de corps (3) et avec une deuxième surface principale de support (12) opposée à ladite surface de corps (3) et au moins une pièce (13) recouverte dans l'évidement (5) par le support de pièce (10) et appliquée sur le support de pièce (10) dans la région de la deuxième surface principale de support (12) opposée à ladite surface de corps (3), un support d'hologramme (30 ; 36) en forme de plaque qui présente un hologramme (33) sur sa surface principale (31, 37) visible de l'extérieur du support de données (1) étant prévu sur le support de données (1) dans la région de sa dite surface de corps (3), caractérisé en ce que le support de données (1) dont le module (9) présente un support de pièce (10) conçu sans contact dans la région de sa première surface principale de support (11) est prévu en vue de l'exécution d'un fonctionnement exclusivement sans contact et que le support d'hologramme (30 ; 36) en forme de plaque est prévu sur le support de données (1) en chevauchant le support de pièce (10) en forme de plaque du module (9) dans la région de sa première surface principale de support (11) tournée vers ladite surface de corps (3) et recouvre du moins en grande partie ce support de pièce en forme de plaque (10).

2. Support de données (1) selon la revendication 1, caractérisé en ce que le support d'hologramme (30; 36) en forme de plaque recouvre complètement par sa surface principale (31; 37) présentant un hologramme (33) la première surface principale de support (11) du support de pièce (10) conçue sans contact et tournée vers ladite surface de corps.

3. Support de données (1) selon la revendication 2, caractérisé en ce la première surface principale de support (11) du support de pièce (10) en forme de plaque conçue sans contact et tournée vers ladite surface de corps (3) et la surface principale (31) présentant un hologramme (33) du support d'hologramme (30) en forme de plaque présentent une conception de surface totalement identique et que le support d'hologramme (30) est fixé exclusivement avec le support de pièce (10).

4. Support de données (1) selon la revendication 2, caractérisé en ce que le support d'hologramme (36) en forme de plaque est fixé avec une zone de bordure de sa surface principale (37) présentant un hologramme (33) qui déborde de la première surface principale de support (11) du support de pièce (10) tournée vers ladite surface de corps (3) le long de toute sa périphérie et le support d'hologramme (36) est à cette occasion fixé avec le support de pièce (10) et, par ailleurs, sa zone de bordure au corps de support de données (2).

5. Support de données (1) selon l'une des revendications 1 à 4, caractérisé en ce que le support de données (1) est conçu comme une carte à puce.
